# EUROPÄISCHE PATENTSCHRIFT

(11) **EP 1 622 782 B1**
(45) Veröffentlichungstag und Bekanntmachung des Hinweises auf die Patenterteilung: **12.03.2008**
(21) Anmeldenummer: 04726454.4
(22) Anmeldetag: 08.04.2004
(51) Int. Cl.: B60G 17/04, B60G 17/005

(54) **HYDROPNEUMATISCHE FEDERUNG**
HYDROPNEUMATIC SUSPENSION
SUSPENSION HYDROPNEUMATIQUE

(30) Priorität: 09.05.2003 DE 10320954
(43) Veröffentlichungstag der Anmeldung: 08.02.2006
(73) Patentinhaber: Hydac System GmbH, 66280 Sulzbach/Saar (DE)
(72) Erfinder: KÜHN, Michael, 23936 Wotenitz (DE); SCHMIDT, Hubertus, 66280 Sulzbach (DE)
(74) Vertreter: Bartels, Martin Erich Arthur
(86) Internationale Anmeldenummer: PCT/EP2004/003759
(87) Internationale Veröffentlichungsnummer: WO 2004/098918

(56) Entgegenhaltungen:
- DE-A- 3 742 883
- DE-C- 4 242 448
- US-A- 3 761 110

## Beschreibung

Die Erfindung betrifft eine hydropneumatische Federung gemäß der Merkmalsausgestaltung des Oberbegriffes des Patentanspruches 1.

Dahingehende hydropneumatische Federungen werden beispielsweise als Hinterachsfederungen bei Traktoren oder sonstigen Arbeitsmaschinen eingesetzt. Ist über das vorgesteuerte Ventil eine fluidführende Verbindung zwischen Federungsspeicher und Federungszylinder hergestellt, insbesondere in Form eines üblichen Hydrospeichers bzw. Arbeitszylinders, der mit dem jeweiligen Radsatz des Traktors oder der Arbeitsmaschine in Verbindung steht, wird die dahingehende Radachse für den jeweiligen Arbeitseinsatz entsprechend gefedert. Will man nun mit der Arbeitsmaschine, insbesondere in Form eines Traktors, Arbeitsvorgänge durchführen, beispielsweise mit einer Pfluggerätschaft ein Feld pflügen, ist die Federung zu sperren, d.h., über das ansteuerbare Ventil wird die Verbindung zwischen Federungszylinder und Federungsspeicher unterbrochen. Dies hat nunmehr den Vorteil, dass sich nicht ungewollt die "Arbeitshöhe" des Pfluges oder einer sonstigen Arbeitsgerätschaft ändert, was ansonsten den jeweils vorgesehenen Arbeitseinsatz beeinträchtigen könnte.

Die bekannten technischen Lösungen, wie sie frei auf dem Markt erhältlich sind, setzen zum dahingehenden Stillsetzen der hydropneumatischen Federung regelmäßig eine rein elektrische Betätigung des vorgesteuerten Sperrventils ein, und da dieses ansteuerbare Ventil im Hinblick auf die dann zu beherrschenden Durchflußmengen recht groß aufbaut, sind wiederum große Betätigungskräfte zum Schalten des Ventils notwendig, was wiederum zu entsprechend großdimensionierten Schaltmagneten für das Ansteuern des Ventils führt, die auch eine entsprechend hohe Leistungsaufnahme an elektrischem Strom aufweisen. Desweiteren ist bei Stillsetzen der hydropneumatischen Federung, bei der das vorgesteuerte Ventil seine Sperrstellung einnimmt, das dahingehende Antriebskonzept starr ausgelegt und Einflüsse auf die Arbeitsgerätschaft, beispielsweise durch Bodenunebenheiten, über die der Traktor oder die Arbeitsmaschine fährt, führen dazu, dass die dahingehenden Störeinflüsse an die Arbeitsgerätschaft, wie einem Pflug, weitergegeben werden, was den eigentlichen Pflugvorgang deutlich beeinträchtigen kann, wobei selbstredend das Fahrzeug jedenfalls steifer in seiner Fahrcharakteristik auszulegen ist, als die Regelung des Pfluges damit überhaupt sinnvoll ein Arbeitsvorgang wie Pflügen oder dergleichen möglich ist. Auch kommt es bei den bekannten Lösungen häufig beim Entsperrvorgang, der dann rasch von statten geht, dazu, dass die möglicherweise vorhandene Druckdifferenz zwischen Federungszylinder und Druckspeicher sehr schnell ausgeglichen wird, was zu einem "Springen" des Fahrzeuges führt.

Der Stand der Technik in Form der DE 42 42 448 C1 betrifft eine hydropneumatische Federungseinrichtung für Fahrzeuge mit großen Lastverhältnissen, insbesondere für Traktoren mit Aufnahmemitteln für Anbaugeräte, und Load-Sensing-Pumpen zur Druckerzeugung, wobei auch die Ringräume der Federzylinder druckbeaufschlagt und mit einem Hydrospeicher verbunden sind.

Bekannte Anordnungen dieser Art besitzen Regelmechanismen, die von Konstantdrucksystemen gespeist werden müssen und bei denen der Einsatz einer Load-Sensing-Pumpe keinen Erfolg bringt, da diese immer gegen hohen Druck fördern müßte. Diese bekannten Systeme haben weiterhin den Nachteil, dass sie permanent Energie verbrauchen.
Energieeinsparungen und die Möglichkeit zum Einsatz einer Load-Sensing-Pumpe ergeben sich nach der in der DE 42 42 448 C1 beschriebenen Lösung dadurch, dass der Ringraum über ein 3-Wege-Druckregelventil mit Druck versorgt wird und eine Niveauregeleinrichtung mit einer Ventileinrichtung vorgesehen ist, die nur bei statischen Laständerungen kurzzeitig auf- oder abregelt und in der sonst eingenommenen Ruhestellung alle Steuerleitungen und Zuleitungen drucklos macht, wobei die Kolben- und Ringräume über entsperrbare Rückschlagventile hermetisch abgesperrt werden.
Auch bei dieser bekannten Lösung ist nicht auszuschließen, dass es beim Entsperrvorgang aufgrund der möglicherweise vorhandenen Druckdifferenz ungewollt zu Bewegungen bei dem Fahrzeug kommt.

Durch die US-A-3 761 110 ist eine gattungsgemäße hydropneumatische Federung mit mindestens einem Federungszylinder und mindestens einem als Federungsspeicher ausgebildeten Hydrospeicher und mit einem vorgesteuerten Ventil zum Freigeben oder Sperren einer fluidführenden Verbindung zwischen dem Federungszylinder und dem Federungsspeicher bekannt, wobei das vorgesteuerte Ventil mittels einer hydraulischen Ansteuereinrichtung in die Schließstellung bringbar ist, und wobei die hydraulische Ansteuereinrichtung den Fluiddruck zwischen Federungsspeicher und jeweils zugeordnetem Federungszylinder abgreift und über ein Schaltventil auf eine Betätigungsseite des vorgesteuerten Ventils über mindestens eine Vorsteuerleitung weiterleitet. Auch bei dieser nächstkommenden Lösung ist es möglich, dass beim Entsperrvorgang aufgrund der möglicherweise vorhandenen Druckdifferenz es ungewollt zu Bewegungen bei dem Fahrzeug kommt.

Ausgehend von diesem Stand der Technik, wie er bei einer Vielzahl von auf dem Markt erhältlichen Traktor- und Arbeitsmaschinenkonzepten vorkommt, liegt der Erfindung die Aufgabe zugrunde, die dahingehenden Probleme zu vermeiden und insbesondere auch eine klein aufbauende und energetisch günstige Ventilsteuereinrichtung für hydropneumatische Federungen zu schaffen, mit der zum einen große Volumenströme beherrschbar sind und mit der zum andern ein "sanftes" Entsperren der hydropneumatischen Federung gewährleistet ist. Eine dahingehende Aufgabe löst eine hydropneumatische Federung mit den Merkmalen des Patentanspruchs 1 in seiner Gesamtheit.

Dadurch, dass gemäß dem kennzeichnenden Teil des Patentanspruches 1 zwischen dem einen Schaltventil und dem vorgesteuerten Ventil ein weiteres Proportionalventil in die jeweils zuordenbare Vorsteuerleitung geschaltet ist, ist es mit der erfindungsgemäßen Federungsanordnung zum einen möglich große Volumenströme sicher zu beherrschen, und zum anderen kann die Federung langsam entsperrt werden, so dass etwaige vorhandene Druckdifferenzen zwischen Federungszylinder und Druckspeicher langsam ausgeglichen werden und somit das unerwünschte "Springen" des Fahrzeuges oder der Arbeitsmaschine mit Sicherheit vermieden ist.

Die im wesentlichen auf einem hydraulischen Konzept basierende Entsperreinrichtung baut konstruktiv klein auf und läßt sich in der Herstellung kostengünstig realisieren. Da ohnehin zur Realisierung der hydropneumatischen Federung ein Hydraulikmedium eingesetzt ist, braucht neben diesem nicht noch eine weitere Energieart (elektrischer Strom) eingesetzt zu werden um eine dahingehende Federung sinnfällig zu betreiben, was wiederum die Herstellungs- und Wartungskosten reduziert. Als besonders vorteilhaft hat es sich dabei erwiesen, als weiteres Ventil ein Proportional-Druckbegrenzungsventil einzusetzen. Bei einer bevorzugten Ausführungsform der erfindungsgemäßen hydropneumatischen Federung ist vorgesehen, dass das vorgesteuerte Ventil zwei Betätigungsseiten hat, zum einen mit einem Vorsteuerteil, zum andern mit einer Rückstellfeder und dass beide Betätigungsseiten an einer Fluidleitung angeschlossen sind, in Form der ersten und einer zweiten Vorsteuerleitung. Bei einer weiteren bevorzugten Ausführungsform der erfindungsgemäßen hydropneumatischen Federung ist es vorgesehen, dass das Proportional-Druckbegrenzungsventil zwischen erstem Ventil und einem Abzweig angeordnet ist, der zum einen eine fluidführende Verbindung mit dem Tank aufweist und an dem zum anderen die zweite Vorsteuerleitung des vorgesteuerten Ventils angeschlossen ist.

Alternativ kann hierzu bei einer anderen bevorzugten Ausführungsform der erfindungsgemäßen hydropneumatischen Federung vorgesehen sein, dass das Proportional-Druckbegrenzungsventil in die erste Vorsteuerleitung geschaltet ist und dass im Nebenzweig zu diesem Proportional-Druckbegrenzungsventil ein Rückschlagventil geschaltet ist, das in Richtung des Vorsteuerteiles des vorgesteuerten Ventils öffnet.

Bei der letztgenannten Ausführungsform kann es in vorteilhafter Weise des weiteren vorgesehen sein, dass das in die erste Vorsteuerleitung geschaltete Proportional-Druckbegrenzungsventil in der Art einer Brückenschaltung über Rückschlagventile gegen unbeabsichtigt falsche Fluid-Durchströmungsrichtung gesichert ist.

Vorzugsweise wird bei der Realisierung der hydropneumatischen Federung als vorgesteuertes Ventil ein Proportionalventil, insbesondere in Form eines 2/2 Wege-Ventils eingesetzt und das erste Ventil bzw. das Schaltventil ist in Form eines 2/3 Wege-Sitz Ventils realisiert.

Im folgenden wird die erfindungsgemäße hydropneumatische Federung anhand dreier Ausführungsbeispiele nach der Zeichnung näher erläutert. Dabei zeigen in prinzipieller und nicht maßstäblicher Darstellung die drei Figuren jeweils einen hydraulischen Schaltplan der hydropneumatischen Federung je ein Ausführungsbeispiel betreffend.

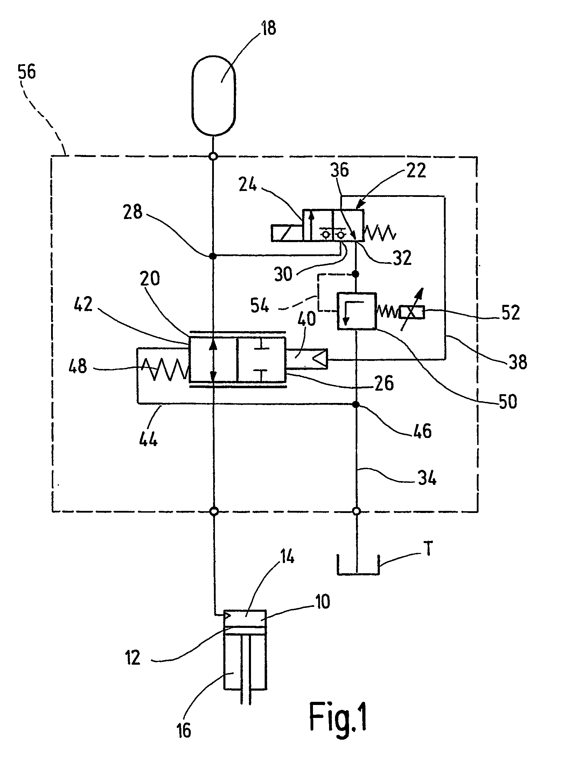

Die hydropneumatische Federung gemäß der Darstellung nach Fig. 1 weist einen Federungszylinder 10 in der hierfür üblichen Bauart auf. Der Federungszylinder 10 ist mit einer Kolbenstangeneinheit 12 versehen und an dem freien Ende dieser Kolbenstange dieser Einheit ist eine Radachse eines entsprechenden Radsatzes (nicht dargestellt) angeordnet. Beim Hin- und Herbewegen der Kolbenstangeneinheit 12 innerhalb des Federungszylinders 10 wird in den beiden Arbeitsräumen 14, 16 auf übliche Art und Weise ein Hydraulikmedium ein- und ausgeschoben, so dass auf die dahingehenden Einzelheiten an dieser Stelle nicht mehr näher eingegangen wird.

Der dahingehende Federungszylinder 10 läßt sich, was noch näher beschrieben werden wird, in Wirkverbindung bringen mit einem Federungsspeicher 18 in Form eines üblichen Arbeits- oder Hydrospeichers, beispielsweise in Form eines Membran- oder Blasenspeichers, wobei eine nicht näher dargestellte Trenneinrichtung in Form einer Trennmembran oder Trennblase das Hydraulikmedium für die Federung von einem Gasvorrat im Speicher trennt, dessen Druckpolster die Federsteifigkeit für den jeweiligen Federungszylinder 10 mitbestimmt. Auch die dahingehende Anordnung ist dem Grunde nach für hydropneumatische Federungen üblich, so dass an dieser Stelle auf Einzelheiten in diesem Zusammenhang gleichfalls nicht mehr näher eingegangen wird.

Festzustellen bleibt aber jedenfalls, dass wie dargestellt, ein Federungszylinder 10 einem Federungspeicher 18 zuordenbar ist; es sind aber auch Ausgestaltungen denkbar, bei denen in mehrfacher Anordnung Federungszylinder 10 und Federungsspeicher 18 vorhanden sind und ein Federungsspeicher 18 kann mehrere Federungszylinder 10 entsprechend für deren Einfedervorgänge ansteuern. Zwischen dem Federungszylinder 10 und dem Federungsspeicher 18 ist ein vorgesteuertes Ventil 20 geschaltet, das in der Darstellung in Fig. 1 in seiner Neutralstellung gezeigt ist, d.h. in seiner durchgeschalteten, freigebenden Öffnungsstellung, bei der der Arbeitsraum 14 des Federungszylinders 10 fluidführend mit der Fluidseite des Federungsspeichers 18 in Wirkverbindung steht und dergestalt die hydropneumatische Federung für den nicht näher dargestellten Radsatz bzw. die Radachse bildet.

Das vorgesteuerte Ventil 20, insbesondere in Form eines Proportionalventiles, läßt sich mittels einer als Ganzes mit 22 bezeichneten hydraulischen Ansteuereinrichtung in die Schließstellung bringen, bei der die fluidführende Verbindung bezogen auf das vorgesteuerte Ventil 20 zwischen Federungszylinder 10 und Federungsspeicher 18 unterbrochen ist. Die genannte hydraulische Ansteuereinrichtung 22 greift den Fluiddruck zwischen Federungsspeicher 18 und dem jeweils zugeordneten Federungszylinder 10 ab, und zwar zwischen Federungsspeicher 18 und Ventil 20 und leitet diesen über ein Schaltventil 24 auf eine der Betätigungsseiten 26 des vorgesteuerten Ventiles 20. Die genannte Abgriffstelle zwischen Ventil 20 und Federungsspeicher 18 ist in der Fig. 1 mit 28 bezeichnet. Das genannte Schaltventil 24 in der Art eines 3/2 Wege-Sitz-Ventiles weist neben einem ersten Eingang 30, der fluidführend an die Abgriffstelle 28 angeschlossen ist, einen weiteren zweiten Eingang 32 auf, der über eine Verbindungsleitung 34 an den Tank T der hydropneumatischen Federung angeschlossen ist. Des weiteren weist das Schaltventil 24 einen Ausgang 36 auf, an den die eine Vorsteuerleitung 38 angeschlossen ist, die auf der Betätigungsseite 26 des vorgesteuerten Ventils 20 an dem Vorsteuerteil 40 des Ventils 20 angreift. Neben der ersten Vorsteuerleitung 38 besteht für die andere Betätigungsseite 42 des Ventils 20 eine weitere zweite Vorsteuerleitung 44, die über einen Anschluß 46 in die zum Tank T führende Verbindungsleitung 34 mündet. An der anderen Betätigungsseite 42 des Ventils 20 greift als Rückstelleinrichtung eine Druckfeder 48 in üblicher Weise an.

Des weiteren ist in die Verbindungsleitung 34 zwischen dem zweiten Eingang 32 des Schaltventils 24 und dem Anschluß 46 ein weiteres Ventil in Form eines Proportional-Druckbegrenzungsventils 50 geschaltet. Die Öffnungscharakteristik für das dahingehende Ventil 50 läßt sich in üblicher Weise über eine Einstelleinrichtung 52 vorgeben und zum Abgriff des Druckes zwischen Proportional-Druckbegrenzungsventil 50 und dem zweiten Eingang 32 des Schaltventils 24 dient die dahingehend in die Verbindungsleitung 34 mündende Nebenzweigleitung 54. Die derart aufgebaute Steuerungseinrichtung bildet eine Art Sperrblock 56, die in der Fig. 1 mit einem strichlinierten Kasten von den wesentlichen Komponenten her umfaßt ist.

Des besseren Verständnisses wegen soll nunmehr die hydropneumatische Federung gemäß der Darstellung nach Fig. 1 anhand ihrer Funktion näher erläutert werden. In der in der Fig. 1 gezeigten Stellung "Offen" verbindet das vorgesteuerte Proportional 2/2 Wege-Ventil 20 den Federungszylinder 10 mit dem Federungsspeicher 18. Die Vorsteuerleitung 38 dieses Ventiles 20 ist über das 2/3 Wege-Sitz-Ventil 24 als Schaltventil und über das Proportional-Druckbegrenzungsventil 50 mit dem Tank T verbunden. In der dahingehenden "Offen"-Stellung ist die Federung voll aktiv.

Soll die Federung nunmehr in die Stellung "Gesperrt" gebracht werden, beispielsweise um mit einer Arbeitsgerätschaft wie einem Pflug, angebracht an einem Traktor, sinnfällig arbeiten zu können, wird das Schaltventil 24 betätigt, und zwar derart, dass der Federungsspeicher 18 mit dem Vorsteuerteil 40, beispielsweise in Form eines Vorsteuerkolbens, über die erste Vorsteuerleitung 38 verbunden ist. Als Vorsteuerenergie kann dabei der gesamte vorhandene Druck im Federungsspeicher 18 genutzt werden, und das hydraulisch vorgesteuerte Ventil 20 schaltet in seine in Blickrichtung auf die Fig. 1 gesehen rechte Sperrstellung. Das Ventil 20 ist damit geschlossen und somit der Federungsspeicher 18 vom Federungszylinder 10 entkoppelt.

Will man nun diesen gesperrten Zustand zeitlich relativ lang andauernd, also "langsam entsperren", ist wiederum das 3/2 Wege-Ventil 24 zu schalten, und der Ausgang 36 des Ventils 24 ist mit dem zweiten Eingang 32 desselben fluidführend verbunden. Der in der ersten Vorsteuerleitung 38 anstehende Vorsteuerdruck des vorgesteuerten Ventils 20 wird dann dergestalt über das Schaltventil 24 an das Proportional-Druckbegrenzungsventil 50 angelegt, so dass hier das Proportional-Druckbegrenzungsventil 50 den Vorsteuerdruck definiert absenken kann. Durch das definierte Absenken des Vorsteuerdruckes kann die Kolbenstellung des Vorsteuerteiles 40 und mithin die Durchlaßmenge an zu transportierendem Fluid zwischen Federungsspeicher 18 und Federungszylinder 10 definiert bestimmt und eingestellt werden. Dadurch dass aber das Ventil 20 proportional zur Ansteuersystematik des Druckbegrenzungsventils 50 geöffnet werden kann, erfolgt der genannte Entsperrvorgang langsam und es kommt nicht ungewollt zu einem sogenannten "Springen" des Fahrzeuges, beispielsweise in Form einer Arbeitsmaschine, eines Traktors oder dergleichen. Wird das vorgestellte Ventil 20 wiederum gesperrt, kann die in der zweiten Vorsteuerleitung 44 verdrängte Fluidmenge über die Verbindungsleitung 34 zum Tank T hin ausgeschoben werden.

Zusammengefaßt lassen sich also die Besonderheiten der hydropneumatischen Federung wie folgt darstellen. Zunächst wird als Vorsteuerenergie für das Ventil 20 der jeweils im Federungsspeicher 20 vorhandene Druck vollumfänglich genutzt. Durch das Proportional-Druckbegrenzungsventil 50, das in die Vorsteuerleitung 38 zuschaltbar ist, kann der Vorsteuerdruck entsprechend geregelt werden. Über den Vorsteuerdruck wird eine axiale Verschiebekraft auf den Ventilkolben des Vorsteuerteiles 40 erzeugt, die gegen die Rückstellfeder 48 des Ventiles 20 wirkt, so dass derart die Kolbenstellung definiert werden kann und mithin die Durchlaßmenge an Fluid zwischen Federungsspeicher 18 und Federungszylinder 10. Dadurch dass das Ventil 20 beim Entsperrvorgang langsam geöffnet werden kann, läßt sich eine möglicherweise vorhandene Druckdifferenz zwischen Federungszylinder 10 und Druckspeicher 18 dergestalt langsam ausgleichen, so dass ein ungewolltes "Springen" des jeweiligen Arbeitsfahrzeuges beim Entsperren der Federung vermieden ist.

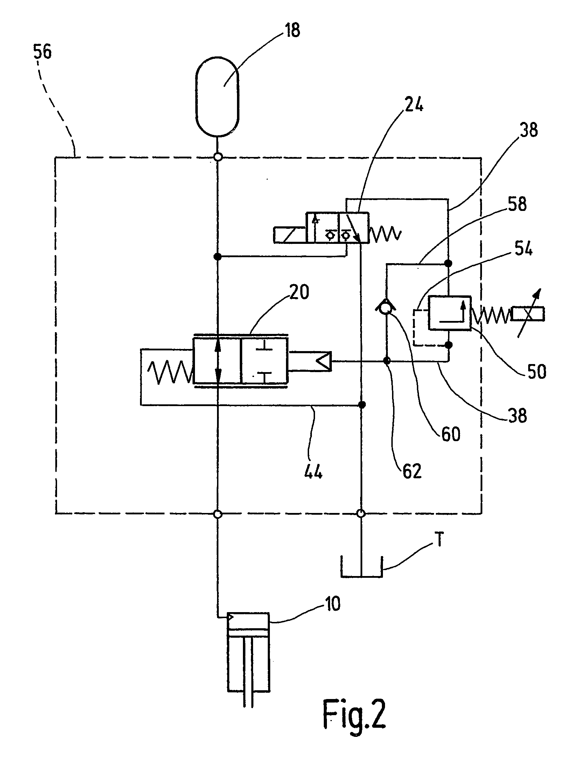

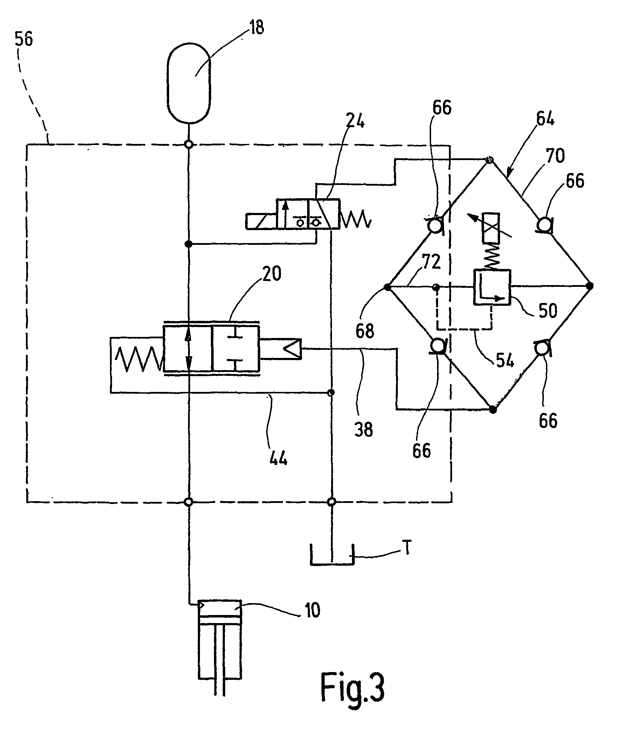

Bei der Beschreibung der nachfolgenden Ausführungsformen anhand der Fig. 2 und 3 werden der Einfachheit halber dieselben Bezugszeichen verwendet, wie für die Schalt- und Baumkomponente gemäß der Darstellung nach Fig. 1. Die dahin geänderten Ausführungsformen ändern am prinzipiellen Funktionsablauf wie vorstehend beschrieben nichts und stellen mithin nur Varianten der Ausführungsform nach der Fig. 1 dar.

Bei der Ausführungsform nach Fig. 2 wird das Proportional-Druckbegrenzungsventil 50 unmittelbar in die erste Vorsteuerleitung 38 für das Ventil 20 geschaltet, wobei im Nebenzweig 58 ein Rückschlagventil 60 geschaltet ist, das in Richtung des Vorsteuerteiles 40 öffnet. Desweiteren erfolgt ein Druckabgriff für das Proportional-Druckbegrenzungsventil 50 an einer Stelle zwischen dem Ventil 50 und einer Anschlußstelle 62 für das Rückschlagventil 60 in der ersten Vorsteuerleitung 38. Dergestalt wird für einen langsamen Entsperrvorgang, also beim langsamen Öffnen des Ventils 20, die hierbei verdrängte Fluidmenge vom Kolben des Vorsteuerteiles 40 über das Proportional-Druckbegrenzungsventil 50 und das Schaltventil 24 in der gezeigten Stellung in Richtung zum Tank T hin ausgeschoben. Bei der Ausführungsform nach der Fig. 3 definiert sich das dortige Proportional-Druckbegrenzungsventil 50 wiederum im fluidführenden Bereich der ersten Vorsteuerleitung 38 für das Ventil 20 und ist dort über eine hydraulische Brükkenschaltung 64 in der Art einer Wheatstone-Brücke gegen eine möglicherweise falsche Fluiddurchströmungsrichtung entsprechend abgesichert. Die Brückenschaltung 64 weist vier Rückschlagventile 66 auf, die in zwei Nebenzweigen 68, 70 paarweise für ihre geöffnete Stellung aufeinander zubewegbar sind. Zwischen je einem Paar Rückschlagventile 66 in einem der Nebenzweige 68, 70 ist eine Verbindungsleitung 72 angeschlossen, in der das Proportional-Druckbegrenzungsventil 50 geschaltet ist. Kommt es ungewollt zu einer Umkehr der beabsichtigten Fluidströmungsrichtung, sperren die jeweiligen Rückschlagventile und stellen dergestalt sicher, dass von der richtigen Seite her für ein langsames Entsperren des Ventils 20 das Druckbegrenzungsventil 50 korrekt angesteuert wird.

Die genannten Rückschlagventile 60 und 66 können auch in Abhängigkeit des jeweiligen Einsatzfalles federbelastet in ihrer Schließstellung behalten werden. Der einfacheren Darstellung wegen wurden die dahingehenden Rückstellfedern aber weggelassen.

Die in der Art eine Sperrblockes 56 aufgebaute druckpneumatische Federungsanordnung setzt ein vorgesteuertes Proportional 2/2 Wege-Ventil 50 zum Sperren und zum "sanften Entsperren" einer druckpneumatischen Federung ein, wobei sich mit der dahingehenden Schaltungsanordnung auch große Volumenströme sicher beherrschen lassen und im übrigen ist die dahingehende Lösung preiswert in der Herstellung.

## Patentansprüche

1. Hydropneumatische Federung mit mindestens einem Federungszylinder (10) und mindestens einem als Federungsspeicher (18) ausgebildeten Hydrospeicher und mit einem vorgesteuerten Ventil (20) zum Freigeben oder Sperren einer fluidführenden Verbindung zwischen dem Federungszylinder (10) und dem Federungsspeicher (18), wobei das vorgesteuerte Ventil (20) mittels einer hydraulischen Ansteuereinrichtung (22) in die Schließstellung bringbar ist, und wobei die hydraulische Ansteuereinrichtung (22) den Fluiddruck zwischen Federungsspeicher (18) und jeweils zugeordnetem Federungszylinder (10) abgreift und über ein Schaltventil (24) auf eine Betätigungsseite (26) des vorgesteuerten Ventils (20) über mindestens eine Vorsteuerleitung (38,44) weiterleitet, **dadurch gekennzeichnet, dass** zwischen dem einen Schaltventil (24) und dem vorgesteuerten Ventil (20) ein weiteres Proportionalventil (50) in die jeweils zuordenbare Vorsteuerleitung (38,44) geschaltet ist.

2. Hydropneumatische Federung nach Anspruch 1, **dadurch gekennzeichnet, dass** das weitere Ventil (50) ein Proportional-Druckbegrenzungsventil ist.

3. Hydropneumatische Federung nach Anspruch 1 oder 2, **dadurch gekennzeichnet, dass** das vorgesteuerte Ventil zwei Betätigungsseiten (26, 42) hat, zum einen mit einem Vorsteuerteil (40), zum anderen mit einer Rückstellfeder (48) und dass beide Betätigungsseiten (26, 42) an eine Fluidleitung angeschlossen sind in Form der ersten und einer zweiten Vorsteuerleitung (38, 44).

4. Hydropneumatische Federung nach Anspruch 2 und 3, **dadurch gekennzeichnet, dass** das Proportional-Druckbegrenzungsventil (50) zwischen dem ersten Ventil (24) und einem Abzweig (46) angeordnet ist, der zum einen eine fluidführende Verbindung mit dem Tank (T) aufweist und an dem zum anderen die zweite Vorsteuerleitung (44) des vorgesteuerten Ventils (20) angeschlossen ist.

5. Hydropneumatische Federung nach Anspruch 2, **dadurch gekennzeichnet, dass** das Proportional-Druckbegrenzungsventil (50) in die erste Vorsteuerleitung (38) geschaltet ist und dass im Nebenzweig (58) zu diesem Proportional-Druckbegrenzungsventil (50) ein Rückschlagventil (60) geschaltet ist, das in Richtung des Vorsteuerteiles (40) des vorgesteuerten Ventils (20) öffnet.

6. Hydropneumatische Federung nach Anspruch 3, **dadurch gekennzeichnet, dass** die erste Vorsteuerleitung (38) des vorgesteuerten Ventils (20) an den fluidführenden Ausgang (36) des ersten Ventils (24) in Form des Schaltventils angeschlossen ist.

7. Hydropneumatische Federung nach Anspruch 2 und 3, **dadurch gekennzeichnet, dass** das in die erste Vorsteuerleitung (38) geschaltete Proportional-Druckbegrenzungsventil (50) in der Art einer Brückenschaltung (64) über Rückschlagventile (66) gegen eine fehlerhafte mögliche Fluiddurchströmungsrichtung gesichert ist.

8. Hydropneumatische Federung nach einem der Ansprüche 1 bis 7, **dadurch gekennzeichnet, dass** das vorgesteuerte Ventil (20) ein Proportionalventil in Form eines 2/2 Wege-Ventils ist.

9. Hydropneumatische Federung nach einem der Ansprüche 1 bis 8, **dadurch gekennzeichnet, dass** das erste Ventil (24) ein 3/2 WegeSitzventil ist.

10. Hydropneumatische Federung nach einem der Ansprüche 1 bis 9, **dadurch gekennzeichnet, dass** das vorgesteuerte Ventil (20) ein Proportionalventil ist.

## Claims

1. Hydro pneumatic suspension with at least one suspension cylinder (10) and at least one hydro store formed in the way of a suspension store (18), and with a pre-controlled valve (20) for releasing or locking a fluid conveying connection between the suspension cylinder (10) and the suspension store (18), whereby the pre-controlled valve (20) can be brought into the closed position by means of a hydraulic control means (22), and whereby the hydraulic control means (22) records the fluid pressure between the suspension store (18) and relevant associated suspension cylinders (10) and transmits the same to an activating side (26) of the pre-controlled valve (20) via a switching valve (24) and at least one pre-control line (38, 44), **characterised in that** a further proportional valve (50) is switched in the relevant associated pre-control line (38, 44) between one switching valve (24) and the pre-controlled valve (20).

2. Hydro pneumatic suspension according to Claim 1, **characterised in that** the further valve (50) is a proportional pressure limiting valve.

3. Hydro pneumatic suspension according to Claim 1 or 2, **characterised in that** the pre-controlled valve comprises two activating sides (26, 42), one for connection with a pre-control part (40), and once for connection with a returning spring (48), and **in that** both activating sides (26, 42) are connected with a fluid line in the form of a first and a second pre-control line (38, 44).

4. Hydro pneumatic suspension according to Claim 2 or 3, **characterised in that** the proportional pressure limiting valve (50) is located between the first valve (24) and a branch line (46) comprising a fluid conveying connection with the tank (T) on the one hand, and being connected with the second pre-control line (44) of the pre-controlled valve (20) on the other.

5. Hydro pneumatic suspension according to Claim 2, **characterised in that** the proportional pressure limiting valve (50) is switched in the first pre-control line (38), and **in that** a non-return valve (60) is switched in the branch line (58) leading to this proportional pressure limiting valve (50), the opening the pre-controlled valve (20) in the direction of the pre-control part (40).

6. Hydro pneumatic suspension according to Claim 3, **characterised in that** the first pre-control line (38) of the pre-controlled valve (20) is connected to the fluid conveying output (36) of the first valve (24) in the form of a switching valve.

7. Hydro pneumatic suspension according to Claim 2 or 3, **characterised in that** the proportional pressure limiting valve (50) switched in the first pre-control line (38) in the way of a bridging switch (64) is secured against a possible unintended fluid flow direction by means of non-return valves (66).

8. Hydro pneumatic suspension according to one of the Claims 1 to 7, **characterised in that** the pre-controlled valve (20) is a proportional valve in the form of a 2/2-way valve.

9. Hydro pneumatic suspension according to one of the Claims 1 to 8, **characterised in that** the first valve (24) is a 3/2-way seat valve.

10. Hydro pneumatic suspension according to one of the Claims 1 to 9, **characterised in that** the pre-controlled valve (20) is a proportional valve.

## Revendications

1. Suspension hydropneumatique comportant au moins un cylindre de suspension (10) et au moins un réservoir hydraulique, réalisé sous la forme d'un réservoir de suspension (18), et comportant une vanne pilote (20) pour ouvrir ou fermer une liaison fluidique entre le cylindre de suspension (10) et le réservoir de suspension (18), la vanne pilote (20) pouvant être amenée dans la position de fermeture par un dispositif d'activation (22) hydraulique et ledit dispositif d'activation (22) hydraulique prélevant la pression du fluide entre le réservoir de suspension (18) et le cylindre de suspension (10) respectivement associé et la transmettant par l'intermédiaire d'une vanne de commande (24) sur un côté d'actionnement (26) de la vanne pilote (20) via au moins une conduite pilote (38, 44), **caractérisée en ce qu'**une vanne proportionnelle (50) supplémentaire est montée entre l'une des vannes de commande (24) et la vanne pilote (20) dans la conduite pilote (38, 44) respectivement associable.

2. Suspension hydropneumatique selon la revendication 1, **caractérisée en ce que** la vanne (50) supplémentaire est un clapet de limitation de la pression proportionnel.

3. Suspension hydropneumatique selon la revendication 1 ou 2, **caractérisée en ce que** la vanne pilote possède deux côtés d'actionnement (26, 42), d'une part avec une élément pilote (40) et d'autre part avec un ressort de rappel (48), et **en ce que** les deux côtés de commande (26, 42) sont raccordés à une conduite de fluide sous la forme de la première et d'une deuxième conduite pilote (38, 44).

4. Suspension hydropneumatique selon les revendications 2 et 3, **caractérisée en ce que** le clapet de limitation de la pression proportionnel (50) est disposé entre la première vanne (24) et un embranchement (46) qui comporte, d'une part, une liaison fluidique avec la cuve (T) et est raccordé, d'autre part, à la deuxième conduite pilote (44) de la vanne pilote (20).

5. Suspension hydropneumatique selon la revendication 2, **caractérisée en ce que** le clapet de limitation de la pression proportionnel (50) est monté dans la première conduite pilote (38) et **en ce que**, dans la branche secondaire (58) par rapport à ce clapet de limitation de la pression proportionnel (50), est monté un clapet de non-retour (60) qui ouvre vers l'élément pilote (40) de la vanne pilote (20).

6. Suspension hydropneumatique selon la revendication 3, **caractérisée en ce que** la première conduite pilote (38) de la vanne pilote (20) est raccordée à la sortie (36) fluidique de la première vanne (24) sous la forme d'une vanne de commande.

7. Suspension hydropneumatique selon les revendications 2 et 3, **caractérisée en ce que** le clapet de limitation de la pression proportionnel (50), monté dans la première conduite pilote (38) est sécurisé à la manière d'un montage en pont (64) par l'intermédiaire de clapets de non-retour (66) contre une éventuelle direction erronée de circulation du fluide.

8. Suspension hydropneumatique selon l'une quelconque des revendications 1 à 7, **caractérisée en ce que** la vanne pilote (20) est une vanne proportionnelle sous la forme d'une vanne à 2/2 voies.

9. Suspension hydropneumatique selon l'une quelconque des revendications 1 à 8, **caractérisée en ce que** la première vanne (24) est une vanne à siège à 3/2 voies.

10. Suspension hydropneumatique selon l'une quelconque des revendications 1 à 9, **caractérisée en ce que** la vanne pilote (20) est une vanne proportionnelle.
